# EUROPEAN PATENT APPLICATION

(11) **EP 4 848 538 A1**
(43) Date of publication of application: **02.12.2026**
(21) Application number: 24920118.7
(22) Date of filing: 22.11.2024
(51) Int. Cl.: H02K 1/10

(54) **BRUSHLESS DC MOTOR**

(30) Priority: 22.01.2024 WO PCT/JP2024/001714
(71) Applicant: Harmonic Drive Systems Inc., Shinagawa-ku Tokyo 140-0013 (JP); Nippo Denki Co., Ltd., Tokyo 142-0053 (JP)
(72) Inventor: TAKEDA, Toru, Azumino-shi, Nagano 399-8305 (JP); KOBAYASHI, Kiyoto, Azumino-shi, Nagano 399-8305 (JP); MITSUISHI, Akito, Shimoina-gun, Nagano 399-3303 (JP); UTSUMI,Shinichi, Shimoina-gun, Nagano 399-3303 (JP)
(74) Representative: TBK
(86) International application number: PCT/JP2024/041459
(87) International publication number: WO 2025/158761

(57) **Abstract**

In a brushless DC motor (1), the number of poles of a magnet is greater than or equal to four and greater than the number of slots, and a motor stator (4) of the brushless DC motor (1) has a two-split core structure. A toothed core (6) of the motor stator (4) is provided with narrow auxiliary pole teeth (63) disposed between main pole teeth (62), around which a coil is wound. Imbalance of the circumferential-direction magnetic flux distribution is eliminated, and cogging torque is reduced. The magnetic flux generated from the coils (5(U), 5(V), 5(W)) of each phase wound around the main pole teeth (62) and the magnetic flux of the magnet flow efficiently to the auxiliary pole teeth (63) via a cylinder part (61) of the toothed core (6), and thus the electromotive force can be increased.

## Description

### TECHNICAL FIELD

The present invention relates to a brushless DC motor provided with a stator core shape that is suitable for use as a small-scale motor having a low output, e.g., an output of about 75 W or less.

### BACKGROUND ART

In order to achieve a reduction in size and an increase in torque in brushless DC motors that are used as small-sized motors, core-equipped motors are employed instead of typically employed coreless motors. Core-equipped motors can include, as the main structure of a stator core therein, a "slot split core structure" that is split in the circumferential direction for individual slots or a "two-part split core structure" that has a configuration in which a back core surrounds the outer periphery of a toothed core. "Two-part split core structures" are advantageous due to increasing the space factor of windings.

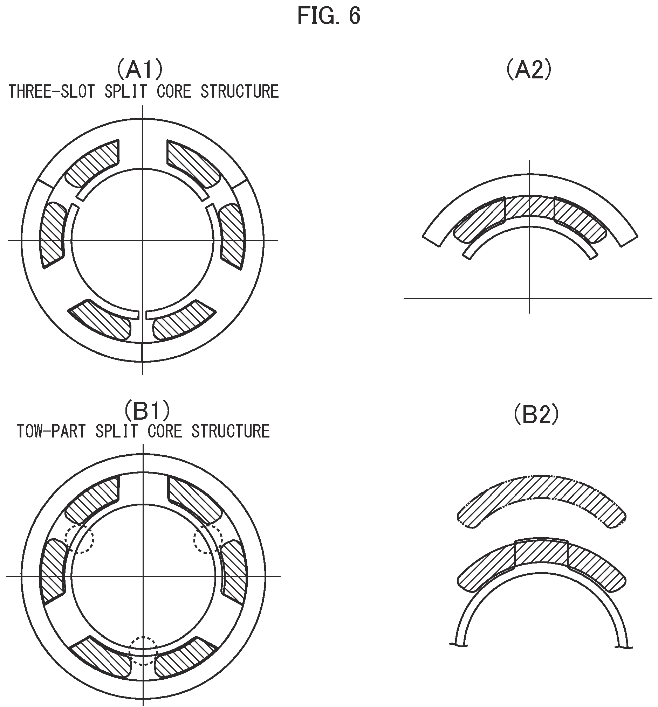

A description follows in which a brushless DC motor having a three-slot structure of three phases is given by way of example. In the case of a three-slot split core structure, slots are disposed at equal angles of 120°, and each slot has a high pole/arc ratio, as shown in FIG. 6(A1). Additionally, a portion having an arc shape extending over a broad angle that is long in the circumferential direction is provided to each split core at the inner and outer peripheral ends of the main poles, which are toothed parts, as shown in FIG. 6(A2). Therefore, in cases in which, e.g., automatic winding is performed, it could be impossible for a coil winding suited to the shape of a gap between the arc-shaped portions on the inner-peripheral side and the outer-peripheral side to be formed in said gap, and it might be impossible for a coil-winding nozzle to enter the gap and for the coil winding to be implemented.

However, in the case of a two-part split core structure in which a stator core is configured from two components, i.e., a toothed core and a back core, toothed parts (main poles) on which windings are implemented are disposed equally in the circumferential direction in the toothed core, as shown in FIG. 6(B1), and the back core may be mounted after the coil windings are mounted on the main poles from the outer-peripheral side, as shown in FIG. 6(B2), therefore making it easy to form the coil windings.

Additionally, in cases in which the motor is to be reduced in size, a broad cross-sectional area of mating surfaces of adjacent split cores cannot be obtained in the case of a three-slot split core structure, presenting a problem in that, in the case of a stator core having a stacked structure, it is impossible to achieve positional precision during stacking/mating of stacked core sheets. However, as a result of configuring the stator core as a two-part split core, the main poles in the toothed core are connected to each other by a ring that is continuous in the circumferential direction, additionally making it easy to ensure positional precision during assembly of a stator core having a stacked structure.

From standpoints such as those described above, it is desirable to employ a stator core having a two-part split core structure when employing a core-equipped motor in order to reduce the size and increase the torque of a brushless DC motor. Patent documents 1, 2, and 3 each disclose a core-equipped motor having a two-part split core structure in which a stator core is configured from two components, i.e., a toothed core and a back core.

### PRIOR-ART DOCUMENT

### PATENT DOCUMENT

Patent Document 1: WO 2016/017179
Patent Document 2: JU 64-45450 A
Patent Document 3: JP 2015-167464 A

### DISCLOSURE OF THE INVENTION

### PROBLEMS TO BE SOLVED BY THE INVENTION

Cogging torque is not generated in coreless motors because such motors do not have iron cores in the interior thereof, but cogging torque is generated in core-equipped motors due to the influence of such cores. The inventors first carried out an experimental evaluation of a core-equipped motor having a two-part split core structure having a two-pole-magnet, three-slot configuration. As a result, it was possible to achieve an increase in induced voltage (torque) over a coreless motor of the same size, despite a considerable increase in cogging torque.

As a measure for reducing the cogging torque of a core-equipped motor, first, a four-pole radial anisotropic magnet was applied as a rotor magnet to increase the number of poles, making it possible to confirm a reduction in cogging torque. However, when the rotor magnet was configured to have four poles, such as when a four-pole, three-slot configuration was adopted, it was confirmed that magnetic flux decreased and the magnetic flux distribution occurring in a stator became unbalanced in arc portions (portions surrounded by the dashed lines in FIG. 6(B1)) near intermediate positions between the main poles in the stator core because said arc portions were set apart from coil winding parts. Due to the imbalance in the magnetic flux distribution, it is impossible to sufficiently suppress cogging torque, and speed ripple and torque ripple of the motor might increase. Additionally, in association with a reduction in effective magnetic flux resulting from the imbalance in the magnetic flux distribution, the induced voltage might decrease and sufficient improvements in torque might be impossible to anticipate. Such drawbacks arise in the case of configurations in which the number of poles is greater than the number of slots.

Accordingly, the inventors employed a stator core having a two-part split core structure in a brushless DC motor in which the number of poles was at least four and was greater than the number of slots in order to reduce the size and increase the torque of the brushless DC motor. The inventors also arrived at employing a toothed core in which auxiliary pole teeth were disposed between main pole teeth on which coil windings were mounted, as a toothed core of a stator core, in order to overcome the aforementioned problems occurring in the cases described above.

It is an object of the present invention to achieve such an increase in torque in a brushless DC motor in which the number of magnet poles is at least four and is greater than the number of slots, and in which auxiliary pole teeth are arranged between main pole teeth in a stator core having a two-part split structure.

### MEANS USED TO SOLVE THE AFOREMENTIONED PROBLEM

In order to solve the aforementioned problem, the brushless DC motor of the present invention is characterized by comprising
a motor rotor, and
a motor stator that coaxially surrounds the motor rotor,
wherein
the motor rotor is provided with a rotor outer peripheral surface in which positive poles and negative poles of permanent magnets are alternatingly arranged at equiangular intervals in a circumferential direction;
the motor stator is provided with a stator core having a two-part split structure, the stator core being provided with a toothed core on which coil windings of various phases are mounted, and a cylindrical back core that coaxially surrounds the toothed core;
the number of poles of the motor rotor is at least four and is greater than the number of slots of the motor stator (the number of coil windings);
the toothed core is provided with
a cylinder part that coaxially surrounds the rotor outer peripheral surface of the motor rotor across a fixed gap, and
a plurality of main pole teeth and a plurality of auxiliary pole teeth that are alternatingly arranged at equiangular intervals in the circumferential direction on the outer peripheral surface of the cylinder part;
as viewed sectioned on a plane perpendicular to the central axis of the cylinder part, each of the main pole teeth and the auxiliary pole teeth protrudes radially outward from the outer peripheral surface of the cylinder part by a fixed width to a position abutting the inner peripheral surface of the back core, the width of the auxiliary pole teeth being less than the width of the main pole teeth; and
the coil windings of different phases are respectively mounted on the main pole teeth between the auxiliary pole teeth that are laterally adjacent in the circumferential direction such that the coil windings do not interfere with these auxiliary pole teeth.

In addition to the aforementioned configuration, the brushless DC motor of the present invention is also characterized in that:
in the cylindrical part of the toothed core, individual arc portions connecting the main pole teeth and the auxiliary pole teeth that are adjacent to each other in the circumferential direction are each provided with a main-pole-side site connected to the main pole teeth and an auxiliary-pole-side site connected to the auxiliary pole teeth; and
the radial-direction thickness at the main-pole-side sites is greater than the radial-direction thickness at the auxiliary-pole-side sites.

For example, settings are configured such that: the thickness at the auxiliary-pole-side sites is fixed at individual positions in the circumferential direction; and the thickness at the main-pole-side sites gradually increases toward the main pole teeth from positions connected to the auxiliary-pole-side sites.

The brushless DC motor of the present invention has, e.g., a four-pole, three-slot configuration. The brushless DC motor is provided with a stator core having a two-part split core structure having a configuration in which three main pole teeth and three auxiliary pole teeth are alternatingly arranged at equiangular intervals in the circumferential direction. The brushless DC motor is also provided with three coil windings mounted on the main pole teeth.

### EFFECT OF THE INVENTION

In the brushless DC motor of the present invention, the auxiliary pole teeth are added at intermediate positions between the main pole teeth of the toothed core, thereby ensuring the passage of magnetic flux. Additionally, because the main pole teeth and the auxiliary pole teeth are disposed at equiangular intervals in the circumferential direction, any imbalance in the magnetic flux distribution is overcome. As a result, cogging torque decreases, and any incidence of speed ripple and torque ripple in the motor is suppressed. The effective magnetic flux also increases, therefore making it possible to expect an improvement in torque resulting from an increase in induced voltage.

Additionally, the auxiliary pole teeth are made less wide than the main pole teeth, making it possible to ensure space for winding the coils while maintaining the requisite motor performance.

Furthermore, in cases in which individual arc portions connecting the main pole teeth and the auxiliary pole teeth in the cylinder part of the stator core are configured such that main-pole-side sites thereof are thicker than auxiliary-pole-side sites thereof, the magnetic flux passing through the main-pole-side sites of the arc portions functions as effective magnetic flux instead of saturation magnetic flux, making it possible to expect an improvement in torque.

Thus, the present invention makes it possible to realize a small-sized, high-torque brushless DC motor in which speed ripple and torque ripple are reduced.

### BRIEF DESCRIPTION OF THE DRAWINGS

FIG. 1(A) is a schematic view showing a half vertical cross-section of a brushless DC motor according to embodiment 1 of the present invention, and FIG. 1(B) is a schematic view showing a lateral cross-section of the same;
FIG. 2(A) is a schematic view showing a control brushless DC motor not provided with auxiliary pole teeth (i.e., in a case without auxiliary pole teeth), and FIG. 2(B) is a schematic view showing the brushless DC motor according to the present invention (i.e., in a case with auxiliary pole teeth);
FIG. 3(A) is a graph showing one example of the result of measuring induced voltage, and FIG. 3(B) is a graph showing one example of the result of measuring cogging torque;
FIG. 4(A) and 4(B) are diagrams showing examples of magnetic flux density distributions (flux lines);
FIG. 5(A) and 5(B) are diagrams showing examples of magnetic flux density distributions (vector plots);
FIG. 6(A1) is a schematic view showing a stator core having a three-slot split core structure, FIG. 6(A2) is a schematic view showing the split cores thereof, FG. 6(B1) a schematic view showing a stator core having a two-part split core structure, and FIG. 6(B2) is a schematic view showing mounting of coil windings;
FIG. 7(A) is a schematic view showing a half vertical cross-section of a brushless DC motor according to embodiment 2 of the present invention, and FIG. 7(B) is a schematic view showing a lateral cross-section of the same; and
FIG. 8 is a lateral cross-sectional view showing the stator core of the brushless DC motor in FIG. 7.

### MODE FOR CARRYING OUT THE INVENTION

Embodiments of a brushless DC motor to which the present invention is applied are described below with reference to the accompanying drawings. The embodiments indicate examples of the present invention, and the present invention is not limited to these embodiments.

### [Embodiment 1]

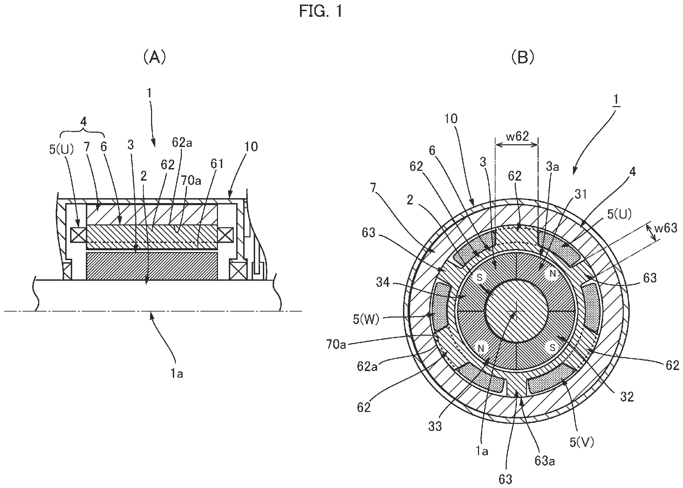

FIG. 1(A) is a schematic view showing a half vertical cross-section of a brushless DC motor according to the present embodiment, and FIG. 1(B) is a schematic view showing a lateral cross-section of the same. The brushless DC motor 1 is a three-phase inner-rotor-type motor comprising a stator having a two-part split core structure and four pole magnets. In the brushless DC motor 1, U, V, and W phases are individually configured from one coil winding (one slot). The brushless DC motor 1 comprises a motor rotor 3 that is coaxially attached to a motor shaft 2 positioned at the center of the brushless DC motor 1, a motor stator 4 that coaxially surrounds the motor rotor 3, and a motor frame 10 that coaxially surrounds the motor stator 4. Switching of energization to the coil windings of each phase is controlled, in accordance with the positions of magnetic poles, by a motor driver (not shown).

The motor rotor 3 is provided with a rotor outer peripheral surface 3a in which positive poles and negative poles of permanent magnets are alternatingly arranged at equiangular intervals in a circumferential direction. In the present example, the motor rotor 3 is provided with four permanent magnets 31 to 34 that are attached to the outer peripheral surface of the motor shaft 2 and are formed in an arc shape extending over an angle of 90°, four poles being formed on the rotor outer peripheral surface 3a at intervals of 90° in the circumferential direction such that positive poles and negative poles are alternatingly arranged.

The motor stator 4 is provided with: a U-phase coil 5(U), a V-phase coil 5(V), and a W-phase coil 5(W) that are composed of, e.g., hollow-core coils; a toothed core 6; and a cylindrical back core 7 that coaxially surrounds the toothed core 6. The toothed core 6 is provided with a cylinder part 61 that coaxially surrounds the rotor outer peripheral surface 3a of the motor rotor 3 across a fixed gap, and main pole teeth 62 and auxiliary pole teeth 63 that are alternatingly arranged at angular intervals of 60° in the circumferential direction on the rounded outer peripheral surface of the cylinder part 61.

As viewed sectioned on a plane perpendicular to the central axis (motor central axis 1a) of the cylinder part 61, each of three main pole teeth 62 protrudes radially outward from the rounded outer peripheral surface of the cylinder part 61 by a set width. Outer-peripheral-side distal-end surfaces 62a of the main pole teeth 62 are formed in an arc shape and abut the rounded inner peripheral surface 70a of the back core 7. Similarly, each of three auxiliary pole teeth 63 protrudes radially outward from the rounded outer peripheral surface of the cylinder part 61. Outer-peripheral-side distal-end surfaces 63a of the auxiliary pole teeth 63 are formed in an arc shape and abut the rounded inner peripheral surface 70a of the back core 7. The width w63 of the auxiliary pole teeth 63 in the present example is less than the width w62 of the main pole teeth 62. In the present example, the width w63 is set to 1/2 of the width w62. Additionally, the U-phase coil 5(U), the V-phase coil 5(V), and the W-phase coil 5(W) are respectively wound around the three main pole teeth 62 between the auxiliary pole teeth 63 that are laterally adjacent in the circumferential direction such that the coils do not interfere with these auxiliary pole teeth 63.

By providing the auxiliary pole teeth 63 in the brushless DC motor 1 comprising the toothed core 6 having the aforementioned form, any imbalance in the magnetic flux distribution in the circumferential direction is overcome, cogging torque is reduced, and torque ripple and speed ripple are reduced.

Additionally, because the magnetic flux of the magnets and the magnetic flux generated from the coils 5(U), 5(V), and 5(W) of each phase that are wound around the main pole teeth 62 flow efficiently to the auxiliary pole teeth 63 as well via the cylinder part 61 of the toothed core 6, it is possible to raise the induced electric power. Specifically, it is possible to suppress the number of turns of the coils 5(U), 5(V), and 5(W) of each phase that are required in order to obtain the desired induced electric power, therefore making it possible to avoid increases in the overall motor length.

Furthermore, the width w63 of the auxiliary pole teeth 63 is set less than the width w62 of the main pole teeth 62. This makes it possible to increase the space for winding the coils and increase the number or diameter of the windings over cases in which the auxiliary pole teeth 63 are set to the same width as the main pole teeth 62. In the present example, the width w63 of the auxiliary pole teeth 63 is set to 1/2 of the width w62 of the main pole teeth 62, and it has been confirmed that the number of windings can be increased by 10% to 15% over cases in which the widths of both types of teeth are the same (i.e., where w62 = w63) while ensuring the required motor performance. This makes it possible to improve torque.

The brushless DC motor 1 has been described by way of an example in which the motor has three slots, which is the minimum configuration having U, V, and W phases. However, as shall be apparent, there is no limitation as to the number of slots; it is possible to apply a configuration provided with the auxiliary pole teeth even in cases in which the number of slots is increased.

The materials of the various parts can be, e.g., the materials indicated below. However, as shall be apparent, the present invention is not limited to these materials.
Motor frame: steel or SUS
Back core: electromagnetic steel sheet or soft magnetic material
Toothed core: electromagnetic steel sheet
Coils: copper
Permanent magnets: neodymium magnets
Motor shaft: steel

The toothed core 6 has, e.g., a stacked structure in which stacked sheets are stacked and bonded in the axial direction. The bonding area increases where the auxiliary pole teeth 63 are provided, therefore providing an advantage in that the strength of the stacked core improves, the stacked sheets do not readily separate, and the stacked core does not readily break. As shall be apparent, the toothed core 6 may have a structure different from a stacked structure.

Hollow-core coils are applied as the coils 5(U), 5(V), and 5(W) of each phase, but there is no limitation as to the method for winding the coils.

### (Example of magnetic analysis)

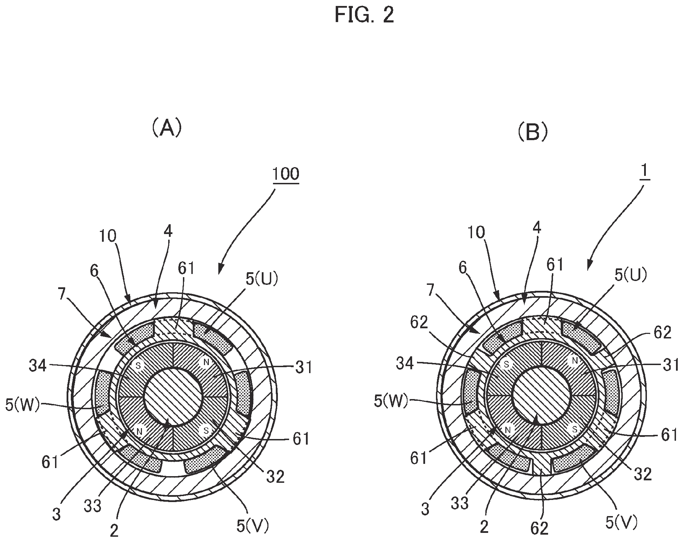

The inventors carried out magnetic analysis of the brushless DC motor 1 comprising the auxiliary pole teeth and a control motor having the same structure, except that the control motor was not provided with auxiliary pole teeth. FIG. 2(A) shows the control brushless DC motor 100 not provided with auxiliary pole teeth (i.e., in a case with only main poles), and FIG. 2(B) shows the brushless DC motor 1 according to the present example (i.e., in a case with main poles and auxiliary poles). In the control brushless DC motor 100, sites that correspond to parts of the brushless DC motor 1 of the present example are associated with the same reference symbols. The materials of the parts are the same as those in the case described above.

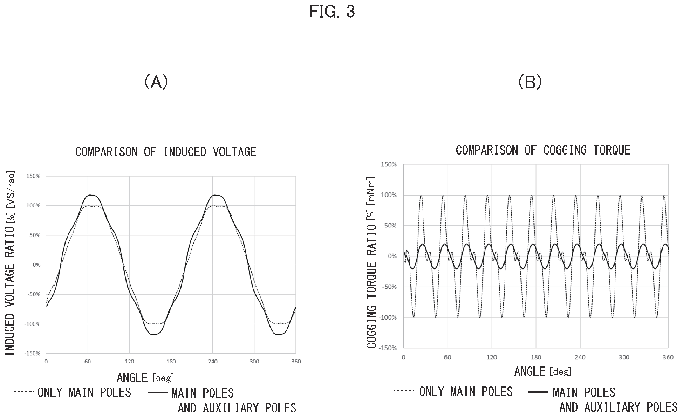

FIG. 3(A) is a graph showing one example of the result of measuring induced voltage, and FIG. 3(B) is a graph showing one example of the result of measuring cogging torque. In the graphs, solid lines indicate measurement results in a case with main poles and auxiliary poles, i.e., in the case of the brushless DC motor 1 of the present example, and dashed lines indicate measurement results in a case with only main poles, i.e., in the case of the control brushless DC motor 100 not provided with the auxiliary pole teeth. Taking the case with only main poles as 100%, in the case with main poles and auxiliary poles, it is understood that the induced voltage improved by about 20% and the cogging torque decreased by approximately 80%.

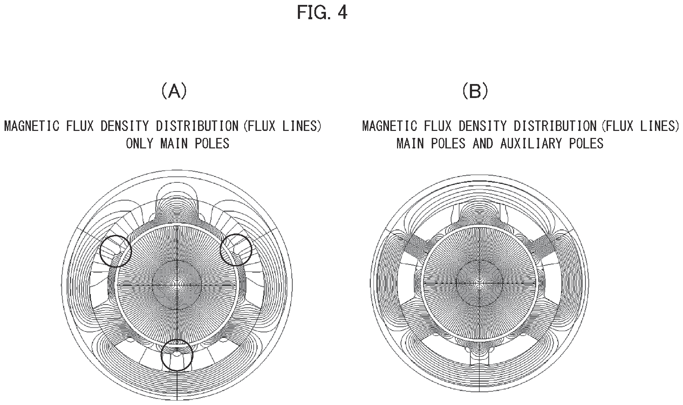

FIG. 4 is a set of diagrams showing examples of magnetic flux density distributions (flux lines). FIG. 4(A) shows the case with only main poles (the case of the control brushless DC motor 100), and FIG. 4(B) shows the case with main poles and auxiliary poles (the case of the brushless DC motor 1 of the present example). In the case with only main poles, the magnetic flux decreases near intermediate positions between the main poles (in portions bounded by solid lines), as shown in FIG. 4(A). However, in the case with main poles and auxiliary poles, the passage of magnetic flux can be ensured due to the addition of the auxiliary poles, as shown in FIG. 4(B). Additionally, adding the auxiliary poles overcomes any imbalance in magnetic flux density distribution due to the flux traveling around the auxiliary poles. Furthermore, the magnetic flux density on the back-core side increases and the effective magnetic flux also increases, which contributes to improvements in induced voltage.

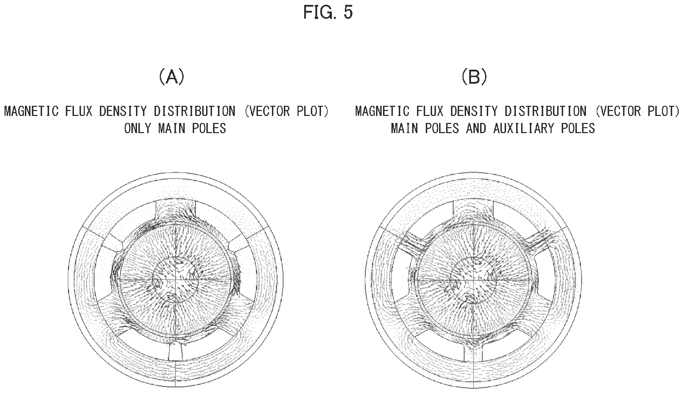

FIG. 5 is a set of diagrams showing examples of magnetic flux density distributions (vector plots). FIG. 5(A) shows the case with only main poles (the case of the control brushless DC motor 100), and FIG. 5(B) shows the case with main poles and auxiliary poles (the case of the brushless DC motor 1 of the present example). In the case with only main poles, locations where magnetic flux is concentrated on the main-pole-teeth side and in the cylinder part (portions bounded by solid lines) are seen, as shown in FIG. 5(A). However, in the case with main poles and auxiliary poles, localized concentrations of magnetic flux are overcome due to the addition of the auxiliary poles, as shown in FIG. 5(B), which contributes to a decrease in cogging torque.

As described above, in the brushless DC motor 1 of the present example, the number of magnetic poles is at least four and is greater than the number of slots (number of coil windings), the stator core has a two-part split core structure, the auxiliary pole teeth are disposed between the main pole teeth in the toothed core of the stator core, and the width of the auxiliary pole teeth is less than (1/2 of) the width of the main pole teeth.

In the toothed core, the auxiliary pole teeth are disposed at intermediate positions between the main pole teeth, making it possible to overcome any imbalance in magnetic flux distribution. This makes it possible to reduce cogging torque. Additionally, in terms of motor performance, speed ripple and torque ripple are suppressed due to the reduction in cogging torque. Furthermore, the effective magnetic flux within the motor stator increases due to the magnetic flux flowing to the auxiliary pole teeth, resulting in anticipated improvements in induced voltage and torque. Additionally, because the width w63 of the auxiliary pole teeth 63 is less than the width w62 of the main pole teeth 62, it is possible to increase the space for winding the coils and increase the number or diameter of the windings over cases in which the auxiliary pole teeth 63 are set to the same width as the main pole teeth 62, even while ensuring the required motor performance. An improvement in torque can also be anticipated as a result.

### [Embodiment 2]

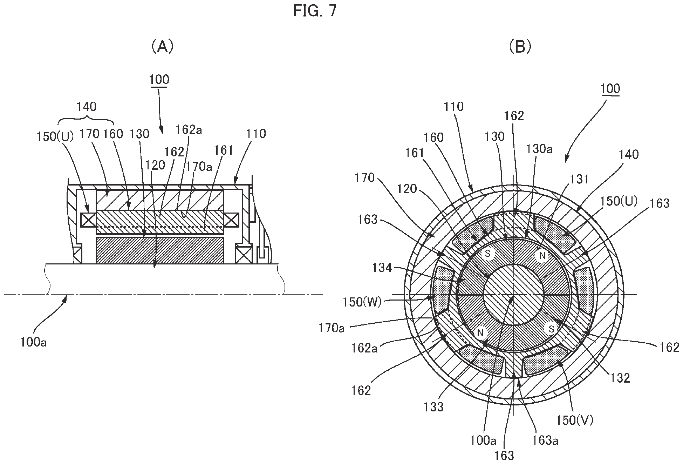

FIG. 7(A) is a schematic view showing a half vertical cross-section of a brushless DC motor according to embodiment 2, and FIG. 7(B) is a schematic view showing a lateral cross-section of the same. The basic structure of the brushless DC motor 100 is the same as in the case described in embodiment 1. The brushless DC motor 100 is a three-phase inner-rotor-type motor comprising a stator having a two-part split core structure four pole magnets. In the brushless DC motor 100, U, V, and W phases are individually configured from one coil winding (one slot). The brushless DC motor 100 comprises a motor rotor 130 that is coaxially attached to a motor shaft 120 positioned at the center of the brushless DC motor 100, a motor stator 140 that coaxially surrounds the motor rotor 130, and a motor frame 110 that coaxially surrounds the motor stator 140. Switching of energization to the coil windings of each phase is controlled, in accordance with the positions of magnetic poles, by a motor driver (not shown).

The motor rotor 130 is provided with a rotor outer peripheral surface 130a in which positive poles and negative poles of permanent magnets are alternatingly arranged at equiangular intervals in a circumferential direction. In the present example, the motor rotor 130 is provided with four permanent magnets 131 to 134 that are attached to the outer peripheral surface of the motor shaft 120 and are formed in an arc shape extending over an angle of 90°, four poles being formed on the rotor outer peripheral surface 130a at intervals of 90° in the circumferential direction such that positive poles and negative poles are alternatingly arranged.

The motor stator 140 is provided with: a U-phase coil 150(U), a V-phase coil 150(V), and a W-phase coil 150(W) that are composed of, e.g., hollow-core coils; a toothed core 160; and a cylindrical back core 170 that coaxially surrounds the toothed core 160. The toothed core 160 is provided with a cylinder part 161 that coaxially surrounds the rotor outer peripheral surface 130a of the motor rotor 130 across a fixed gap, and main pole teeth 162 and auxiliary pole teeth 163 that are alternatingly arranged at angular intervals of 60° in the circumferential direction on the rounded outer peripheral surface of the cylinder part 161.

As viewed sectioned on a plane perpendicular to the central axis (motor central axis) 100a of the cylinder part 161, each of three main pole teeth 162 protrudes radially outward from the rounded outer peripheral surface of the cylinder part 161 by a fixed width. Outer-peripheral-side distal-end surfaces 162a of the main pole teeth 162 are formed in an arc shape and abut the rounded inner peripheral surface 170a of the back core 170. Similarly, each of three auxiliary pole teeth 163 protrudes radially outward from the rounded outer peripheral surface of the cylinder part 161 by a fixed width. Outer-peripheral-side distal-end surfaces 163a of the auxiliary pole teeth 163 are formed in an arc shape and abut the rounded inner peripheral surface 170a of the back core 170. The U-phase coil 150(U), the V-phase coil 150(V), and the W-phase coil 150(W) are respectively wound around the three main pole teeth 162 between the auxiliary pole teeth 163 that are laterally adjacent in the circumferential direction such that the coils do not interfere with these auxiliary pole teeth 163.

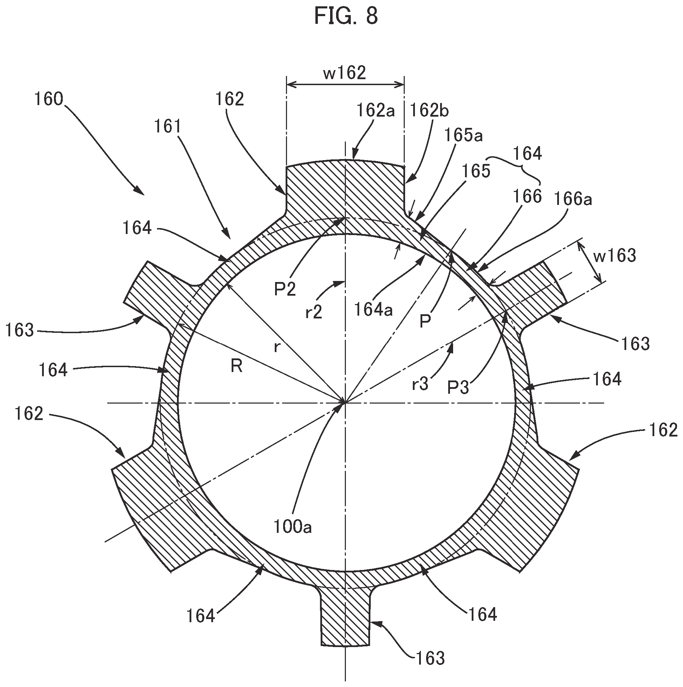

FIG. 8 is a lateral cross-sectional view showing the stator core 160. The widths of the main pole teeth 162 and the auxiliary pole teeth 163, which are formed integrally with the toothed core 160, are set as described below. The width w163 of the auxiliary pole teeth 163 (i.e., the dimension thereof in a direction perpendicular to radius r3 passing through a central position P3 in the circumferential direction) is less than the width w162 of the main pole teeth 162 (i.e., the dimension thereof in a direction perpendicular to radius r2 passing through a central position P2 in the circumferential direction). In the present example, the width w163 is 1/2 of the width w162.

Additionally, when the toothed core 160 is viewed in cross-section perpendicular to the central axis, the individual arc portions 164 connecting the main pole teeth 162 and the auxiliary pole teeth 163 that are adjacent to each other in the circumferential direction in the cylinder part 161 of the toothed core 160 are set as described below. The thickness at main-pole-side sites 165 is greater than the thickness at auxiliary-pole-side sites 166, where the main-pole-side sites 165 are the sides of the arc portions 164 that are connected to the main pole teeth 162, and the auxiliary-pole-side sites 166 are the sides of the arc portions 164 that are connected to the auxiliary pole teeth 163.

In the present example, the inner peripheral surfaces 164a of the arc portions 164 (inner peripheral surface of the cylinder part 161) are defined by arcs of radius r centered on the central axis 100a.

Outer peripheral surface portions 165a of the main-pole-side sites 165 on the outer peripheral surfaces of the arc portions 164 are defined by straight lines smoothly connecting to the radial-direction inner ends of the side surfaces 162b of the main pole teeth 162 via concave curves. Outer peripheral surface portions 166a of the auxiliary-pole-side sites 166 on the outer peripheral surfaces of the arc portions 164 are defined by arcs of radius R (R > r) centered on the central axis (motor central axis) 100a.

On the outer peripheral surface (outer peripheral surface portions 165a and outer peripheral surface portions 166a) of the arc portions 164, the straight lines defining the outer peripheral surface portions 165a and the arcs defining the outer peripheral surface portions 166a are smoothly connected at central positions P in the circumferential direction.

Thus, by defining the inner peripheral surfaces 164a and the outer peripheral surfaces (outer peripheral surface portions 165a and outer peripheral surface portions 166a) of the arc portions 164, the thickness (radial-direction width) of the arc portions 164 gradually increases, at the main-pole-side sites 165, from positions (central positions P) that are connected to the auxiliary-pole-side sites 166 toward the main pole teeth 162, despite being the same at circumferential-direction positions at the auxiliary-pole-side sites 166.

In the present example, the thickness at the main-pole-side sites 165 of the arc portions 164 that are connected to the main pole teeth 162 is increased at the cylinder part 161 of the toothed core 160. The magnetic flux generated from the magnetic force of the magnets can be transmitted to the teeth-core 160 side, and the action from the effective magnetic flux on the stator-core side can be further enhanced.

The coils of various phases are wound around the main pole teeth 162, and the main-pole-side sites 165 of the arc portions 164 also assume the magnetic flux generated from the coils of the main pole teeth 162. Therefore, by increasing the thickness at the main-pole-side sites 165, the magnetic flux passing through said sites functions as effective magnetic flux instead of saturation magnetic flux.

However, at the auxiliary-pole-side sites 166 of the arc portions 164 that are connected to the auxiliary pole teeth 163, the effective magnetic flux decreases; therefore, the thickness at said sites may be less than that at the main-pole-side sites 165.

By increasing the thickness at the main-pole-side sites 165 of the arc portions 164, the space for winding the coils and the space factor of the coils correspondingly decreases. In the present example, the width of the auxiliary pole teeth 163 is decreased to ensure the space for winding the coils, as described previously. This suppresses any reduction in the space for winding the coils resulting from increasing the thickness at the main-pole-side sites 165 of the arc portions 164 where the main pole teeth 162 and the auxiliary pole teeth 163 are connected.

The brushless DC motor 100 according to embodiment 2 exhibits the following actions and effects, similarly to the case described in embodiment 1.

By providing the auxiliary pole teeth 163 to the stator core having the two-part split configuration, any imbalance in the magnetic flux distribution in the circumferential direction is overcome, cogging torque is reduced, and torque ripple and speed ripple are reduced.

Because the magnetic flux of the magnets and the magnetic flux generated from the coils 150(U), 150(V), and 150(W) of each phase that are wound around the main pole teeth 162 flow efficiently to the auxiliary pole teeth 163 as well via the cylinder part 161 of the toothed core 160, it is possible to raise the induced electric power. Specifically, it is possible to suppress the number of turns of the coils 150(U), 150(V), and 150(W) of each phase that are required in order to obtain the desired induced electric power, therefore making it possible to avoid increases in the overall motor length.

The width w163 of the auxiliary pole teeth 163 is set less than the width w162 of the main pole teeth 162. This makes it possible to increase the space for winding the coils and increase the number or diameter of the windings over cases in which the auxiliary pole teeth 163 are set to the same width as the main pole teeth 162. In the present example, the width w163 of the auxiliary pole teeth 163 is set to 1/2 of the width w162 of the main pole teeth 162, and the number of windings can be increased by 10% to 15% over cases in which the widths of both types of teeth are the same (i.e., where w162 = w163) while ensuring the required motor performance. This makes it possible to improve torque.

Additionally, in the brushless DC motor 100 according to embodiment 2, the thickness at the main-pole-side sites 165 of the arc portions 164 is set greater than that at the remaining auxiliary-pole-side sites 166, as described previously. This makes it possible to enable the magnetic flux passing through the main-pole-side sites 165 to function as effective magnetic flux instead of saturation magnetic flux and makes it possible to anticipate improved torque.

The brushless DC motor 100 has been described by way of an example in which the motor has three slots, which is the minimum configuration having U, V, and W phases. However, as shall be apparent, there is no limitation as to the number of slots; it is possible to apply a configuration provided with the auxiliary pole teeth even in cases in which the number of slots is increased.

The materials of the various motor parts can be, e.g., the materials indicated below, as with the case described in embodiment 1. However, as shall be apparent, the motor parts are not limited to these materials.
Motor frame: steel or SUS
Back core: electromagnetic steel sheet or soft magnetic material
Toothed core: electromagnetic steel sheet
Coils: copper
Permanent magnets: neodymium magnets
Motor shaft: steel

The toothed core 160 has, e.g., a stacked structure in which stacked sheets are stacked and bonded in the axial direction. The bonding area increases where the auxiliary pole teeth 163 are provided, therefore providing an advantage in that the strength of the stacked core improves, the stacked sheets do not readily separate, and the stacked core does not readily break. As shall be apparent, the toothed core 160 may have a structure different from a stacked structure.

Hollow-core coils are applied as the coils 150(U), 150(V), and 150(W) of each phase, but there is no limitation as to the method for winding the coils.

## Claims

1. A brushless DC motor **characterized by** comprising
a motor rotor, and
a motor stator that coaxially surrounds the motor rotor,
wherein
the motor rotor is provided with a rotor outer peripheral surface in which positive poles and negative poles of permanent magnets are alternatingly arranged at equiangular intervals in a circumferential direction;
the motor stator is provided with a stator core having a two-part split structure, the stator core being provided with a toothed core on which coil windings of various phases are mounted, and a cylindrical back core that coaxially surrounds the toothed core;
the number of poles of the motor rotor is at least four and is greater than the number of slots of the motor stator;
the toothed core is provided with
a cylinder part that coaxially surrounds the rotor outer peripheral surface of the motor rotor across a fixed gap, and
a plurality of main pole teeth and a plurality of auxiliary pole teeth that are alternatingly arranged at equiangular intervals in the circumferential direction on the outer peripheral surface of the cylinder part;
as viewed sectioned on a plane perpendicular to the central axis of the cylinder part, each of the main pole teeth and the auxiliary pole teeth protrudes radially outward from the outer peripheral surface of the cylinder part by a fixed width to a position abutting the inner peripheral surface of the back core, the width of the auxiliary pole teeth being less than the width of the main pole teeth; and
the coil windings of different phases are respectively mounted on the main pole teeth between the auxiliary pole teeth that are laterally adjacent in the circumferential direction such that the coil windings do not interfere with the auxiliary pole teeth.

2. The brushless DC motor according to claim 1, wherein:
in the cylindrical part of the toothed core, individual arc portions connecting the main pole teeth and the auxiliary pole teeth that are adjacent to each other in the circumferential direction are each provided with a main-pole-side site connected to the main pole teeth and an auxiliary-pole-side site connected to the auxiliary pole teeth; and
the radial-direction thickness at the main-pole-side sites is greater than the radial-direction thickness at the auxiliary-pole-side sites.

3. The brushless DC motor according to claim 2, wherein:
the thickness at the auxiliary-pole-side sites is fixed at individual positions in the circumferential direction; and
the thickness at the main-pole-side sites gradually increases toward the main pole teeth from positions connected to the auxiliary-pole-side sites.

4. The brushless DC motor according to claim 1 or 2, wherein:
a U-phase coil, a V-phase coil, and a W-phase coil are provided as the coil windings; and
at least three main pole teeth around which the U-phase coil, the V-phase coil, and the W-phase coil are respectively wound are provided as the main pole teeth.
